**Europäisches Patentamt**

**European Patent Office**

**Office européen des brevets**

(11) Numéro de publication: **0 283 420**
**A1**

(12) **DEMANDE DE BREVET EUROPEEN**

(21) Numéro de dépôt: **88500023.2**

(22) Date de dépôt: **04.03.88**

(51) Int. Cl.⁴: **A 47 J 37/07**

(30) Priorité: **06.03.87 ES 8700779**

(43) Date de publication de la demande:
**21.09.88 Bulletin 88/38**

(84) Etats contractants désignés:
**AT BE CH DE FR GB GR IT LI LU NL SE**

(71) Demandeur: **MINIGRILL, S.A.**
**8, Ripollet**
**17840 Sarria de Ter (Gerona) (ES)**

(72) Inventeur: **Hom Terrats, Jaime**
**Ripollet 8-1o, tercera**
**E-17840 Sarria de Ter (Gerona) (ES)**

(74) Mandataire: **Comas Carreras, Jaime**
**R: VOLART PONS Y CIA. S.L. Calle Ferran, 53**
**E-08002 Barcelona (ES)**

(54) **Plateau gril.**

㊷ Plateau gril, constitué par un corps (1) avec un grillage métallique (2) pour y placer les aliments, étant logé au dessous du dit grillage un second grillage (3) qui soutien une couche de charbon végetal (4), en contact, par sa face inferieure, avec une mèche d'ignition (5), disposée le long de la face inferieure du second grillage et qui sort par un côté du plateau, assurant le chambre inferieure d'air située au dessous du grillage interieur le maintien de la combustion.

## Description

Plateau gril

La présente invention concerne un plateau gril qui permet directement la préparation des aliments réalisés sur le gril.

Cette invention se refère à un plateau en matériau de feuille d'aluminium ou assimilé, disposant à sa zone superieure d'un grillage métallique pour soutenir les aliments à préparer, étant logée à son interieur et sur un second grillage, une couche de charbon végetal en contact, par sa face inferieure, avec une mèche d'ignition non toxique et sans fumées ni odeurs, qui se trouve disposée le long de la face inferieure du second grillage et qui sort par un côté du plateau. Cette mèche sera quelle qui fournira, une fois allumée, l'inflamation du charbon. La chambre inferieure d'air située au dessous du grillage sert pour mantenir la combustion.

La nouveauté et utilité practique que fournit ledit plateau gril est de constituer un ensemble compact facile à manier et à transporter pour rôtir toutes sortes d'aliments, proprement, commodément et avec sécurité dans sa fonction à usages divers.

Pour mieux comprendre ce qui a été exposé ci-dessus et simplement à titre d'exemple non limitatif, il y a une page de dessins jointe à échelle variable:

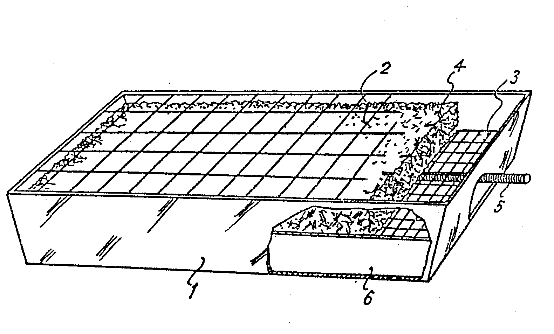

La figure unique représente une vue en perspective de l'ensemble plateau gril avec les élements d'ignition. Dans cette figure on a indiqué avec les repères ci-après, les éléments constitutifs suivants:

1.- Corps du plateau
2.- Grillage pour les aliments
3.- Grillage pour le charbon
4.- Couche de charbon végetal
5.- Mèche d'ignition
6.- Chambre d'air

En se rapportant aux illustrations suscitées, représentant schématichement sa réalisation industrielle et qui n'est inclus qu'à titre d'information et, donc, non limitatif, il y a:

Plateau gril constitué par un corps de plateau (1) de feuille d'aluminium ou assimilé, à forme variable, disposant à sa zone superieure d'un grillage métallique (2) pour soutenir les aliments à préparer, étant logée à son interieur et sur un second grillage (3), une couche de charbon végetal (4), en contact, par sa face inferieure, avec une mèche d'ignition (5), non toxique et sans fumées ni odeurs, qui se trouve disposée le long de la face inferieure du second grillage (3) et qui sort par un côté du plateau (1). Cette mèche (5) sera quelle qui fournira, une fois allumée, l'inflamation du charbon (4). La chambre inferieure (6) d'air située au dessous du grillage (3) sert pour mantenir la combustion.

## Revendications

1.- Plateau gril, caractérisé en ce qu'il est constitué par un ensemble compact intégré par un corps de plateau aus formes variables, disposant sur le haut, comme clôture, d'un grillage métallique pour y placer les aliments lors de la préparation et du rôtissage.

2.- Plateau gril, selon la premieré revendication, caracterisé en ce que le corps du plateau est de préférence de feuille d'aluminum ou assimile, étant logé au dessous du grillage de cuisson ou rôtissage un second grillage qui soutien une couche de charbon végetal, en contact, par sa face inferieure, avec une mèche d'ignition, non toxique et sans fumées ni odeurs, qui se trouve disposée le long de la face inferieure du second grillage et qui sort par un côte du plateau, étant dite mèche quelle qui fournira, une fois allumée, l'inflamation du charbon et assurant la chambre inferieure d'air située au dessous du grillage interieure le maintien de la combustion.

3.- Plateau gril, selon les revendications premiére et deuxième, caractérisé en ce que l'ensemble ainsi constitué est apte pour tout type de rôtissage d'aliments, avec les avantages que fournissent son maniement, transport, nettoyage faciles et sa sécurité d'emploi pour les divers usages.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | WO-A-8 700 017 (DEVAUX) <br> * En entier * <br> --- | 1-3 | A 47 J 37/07 |
| X | US-A-4 531 506 (CHAMBERS et al.) <br> * En entier * <br> --- | 1-3 | |
| X | US-A-3 684 087 (ANDERSON) <br> * En entier * <br> --- | 1-3 | |
| X | FR-A-1 546 021 (TEMP) <br> * En entier * <br> --- | 1,3 | |
| X | DE-A-1 905 465 (WOLF-GERAETE) <br> * En entier * <br> --- | 1,3 | |
| X . | FR-A-2 239 225 (CHARRIN) <br> * En entier * <br> --- | 1,3 | |
| X | US-A-2 965 096 (BARTON) <br> * En entier * <br> --- | 1,3 | DOMAINES TECHNIQUES RECHERCHES (Int. Cl.4) |
| X | US-A-3 910 250 (ORSING) <br> * En entier * <br> ----- | 1,3 | A 47 J |

Le présent rapport a été établi pour toutes les revendications

| Lieu de la recherche | Date d'achèvement de la recherche | Examinateur |
|---|---|---|
| LA HAYE | 10-06-1988 | SCHARTZ J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................................
& : membre de la même famille, document correspondant

EPO FORM 1503 03.82 (P0402)